# EUROPEAN PATENT SPECIFICATION

(11) **EP 0 688 415 B1**
(45) Date of publication and mention of the grant of the patent: **12.02.1997**
(21) Application number: 94909994.9
(22) Date of filing: 21.03.1994
(51) Int. Cl.: F24F 13/02, F24F 7/06, F16L 23/08, F04D 29/60

(54) **FAN CASING**
LÜFTERGEHÄUSE
CARTER DE VENTILATEUR

(30) Priority: 20.03.1993 GB 9305844
(43) Date of publication of application: 27.12.1995
(73) Proprietor: NuAire Limited, Caerphilly Mid Glamorgan CF8 1XH (GB)
(72) Inventor: Biggs, Colin 3 Mount Pleasant Cefn Road, Gwent NP2 1PZ (GB)
(74) Representative: Evans, Huw David Duncan
(86) International application number: GB9400576
(87) International publication number: WO9421971

(56) References cited:
- DE-A- 3 314 064
- US-A- 3 650 633

## Description

The present invention relates to a fan assembly comprising a casing and a fan unit mounted within the casing according to the preamble of claim 1, for example for a heating and ventilating system.

Hitherto fan casings for such applications have been complicated and expensive to construct, in order to ensure accurate concentricity relative to the rotating fan. US 3 650 633 discloses one such casing which consists of a sheet of thick-gauge metal which is wrapped into a cylinder of uniform diameter: the metal is thick enough to ensure that the cylinder will maintain its truly cylindrical shape. Then the opposite ends of the cylinder are bent outwards to form radial flanges, which are then drilled at intervals around their peripheries: these flanges serve for securing, by bolting, to similar flanges on the ends of ducts or other assemblies to which the fan casing is to be connected. Typically twelve bolts are employed for each mating pair of flanges, and take significant time and trouble to insert and tighten.

We have now devised a fan casing of considerably less complicated construction and which, in one form, requires considerably less time and trouble to secure to the ends of other ducts or assemblies.

In accordance with this invention, there is provided a fan assembly comprising a casing and a fan unit mounted within the casing, the casing comprising a duct formed of a sheet of material wrapped into cylindrical form, and two rigid ring-shaped flanges disposed at respective opposite ends of the duct, the fan unit comprising an impeller which is arranged in the casing such that its axis of rotation extends along the axis of the duct, characterised in that the flanges are separate members from the duct, which are attached thereto, and which are arranged to impart rigidity to the fan casing and to ensure concentricity.

The arrangement therefore enables use of a relatively thin-gauge metal for the cylindrical duct of the casing, because the rigid flanges impart rigidity to the fan casing and ensure concentricity.

Preferably the fan casing is secured to the end of an adjacent duct or assembly by means of a ring-shaped band having an inner peripheral groove, and which fits over the flange at the end of the fan casing and over a corresponding flange on the end of the adjacent duct or assembly: this band can be tightened once placed in position, and enables assembly to be carried out very quickly and easily.

Embodiments of this invention will now be described by way of examples only and with reference to the accompanying drawings, in which:
FIGURE 1 is a longitudinal section through a fan unit mounted between two ducting assemblies;
FIGURE 2 is an enlarged sectional view of a coupling between the fan unit and one of the adjacent ducts; and
FIGURE 3 is a view similar to Figure 2, showing a modified embodiment.

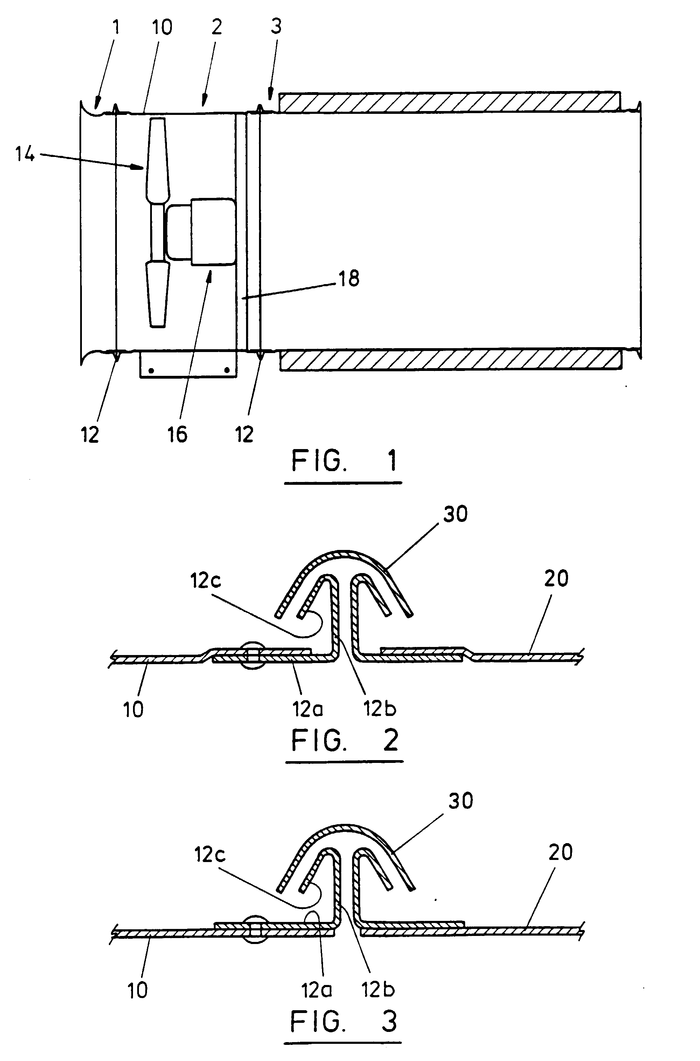

Referring to Figure 1 of the drawings, there is shown a fan unit 2 mounted between a flared inlet 1 and a duct 3. The fan casing comprises a duct 10 formed by a piece of relatively thin sheet metal which has been wrapped into a cylinder and had its opposite edges rivetted or welded together. The casing further comprises a rigid ring-shaped flange 12 rivetted to each end of the duct 10. The flanges 12 impart rigidity to the duct 10, to ensure concentricity relative to the fan blades. As shown, the fan impeller 14 is driven by an electric motor 16 which is mounted to a metal cross-member 18 having its opposite ends rivetted or welded to the duct 10, adjacent one end.

In the embodiment shown in Figure 2, each flange 12 has a cylindrical portion 12a, from which a radially-outwards annulus 12b projects, the outer portion of the annulus 12b being bent inwardly again to form an inclined portion 12c directed towards the cylindrical portion 12a. The end of the casing duct 10 is joggled outwardly as shown to receive the flange cylindrical portion 12a, to which it is rivetted.

In order to assemble the fan casing to the end of an adjacent duct 20 which has a similar flange e.g. 22, a clamping band 30 is used, having a groove around its inner periphery to fit over the two flanges 12, 22 as shown in Figure 2. The band is split at one point around its circumference, and the two ends are fastened together by a screw coupling which, upon tightening, secures the band around both the fan casing and the adjacent duct 20.

Figure 3 shows a modified embodiment, in which the cylindrical portion 12a of each flange fits around the outside of the duct 10, instead of inside the duct 10 as in Figure 2; and the duct 10 is not joggled at its end.

Although use of the clamping band is preferred, instead the flanges may be of L-section (i.e. consisting of portions 12a and 12b in the case of flange 12), with the radially projecting portion (12b) drilled to enable mating pairs of flanges to be bolted together.

## Claims

1. A fan assembly comprising a casing and a fan unit (14, 16) mounted within the casing, the casing comprising a duct (10) formed of a sheet of material wrapped into cylindrical form, and two rigid ring-shaped flanges (12) disposed at respective opposite ends of the duct (10), the fan unit (14, 16) comprising an impeller (14) which is arranged in the casing such that its axis of rotation extends along the axis of the duct (10), characterised in that the flanges (12) are separate members from the duct (10), which are attached thereto, and which are arranged to impart rigidity to the fan casing and to ensure concentricity.

2. A fan casing as claimed in claim 1, characterised in that each said flange (12) comprises a cylindrical portion (12a) secured to the duct (10) and an annular portion (12b) projecting radially-outwards from said cylindrical portion (12a).

3. A fan assembly as claimed in claim 2, characterised in that the annular portion (12b) of each said flange (12)is bent inwardly (12c) to an inclined position directed towards the cylindrical portion (12a) of that flange (12).

4. A fan assembly as claimed in any preceding claim, characterised in that a cross-member having its opposite ends secured to the duct mounts the fan unit (14, 16) in said casing.

5. A fan assembly as claimed in any preceding claim, characterised in that a ring-shaped band (30) is provided for each said flange (12), each said band (30) having an inner peripheral groove for fitting over a said flange (12) of the fan casing duct (10) and a corresponding flange on an end of a duct or assembly (20) to which the fan casing is to be assembled.

## Patentansprüche

1. Lüfteranordnung, die ein Gehäuse und eine in dem Gehäuse angebrachte Lüftereinheit (14, 16) umfaßt, wobei das Gehäuse einen Kanal (10), der aus einer zu einer zylindrischen Form gewickelten Materialtafel besteht, und zwei starre ringförmige Flansche (12), die an jeweiligen sich gegenüberliegenden Enden des Kanals (10) angeordnet sind, aufweist, wobei die Lüftereinheit (14, 16) ein Flügelrad (14) aufweist, das derart in dem Gehäuse angeordnet ist, daß seine Drehachse entlang der Achse des Kanals (10) verläuft, dadurch gekennzeichnet, daß die Flansche (12) von dem Kanal (10) getrennte Glieder sind, die daran befestigt und so angeordnet sind, daß sie dem Lüftergehäuse Steifigkeit verleihen und Konzentrizität gewährleisten.

2. Lüftergehäuse nach Anspruch 1, dadurch gekennzeichnet, daß jeder Flansch (12) einen zylindrischen Teil (12a), der an dem Kanal (10) befestigt ist, und einen ringförmigen Teil (12b), der radial von dem zylindrischen Teil (12a) nach außen ragt, umfaßt.

3. Lüfteranordnung nach Anspruch 2, dadurch gekennzeichnet, daß der ringförmige Teil (12b) jedes Flansches (12) in eine geneigte Position nach innen gebogen (12c) ist, die zu dem zylindrischen Teil (12a) des Flansches (12) gerichtet ist.

4. Lüfteranordnung nach einem der vorhergehenden Ansprüche, dadurch gekennzeichnet, daß die Lüftereinheit (14, 16) durch ein Querglied, dessen einander gegenüberliegenden Enden an dem Kanal befestigt sind, in dem Gehäuse angebracht ist.

5. Lüfteranordnung nach einem der vorhergehenden Ansprüche, dadurch gekennzeichnet, daß für jeden Flansch (12) ein ringförmiges Band (30) vorgesehen ist, wobei jedes Band (30) eine innere Umfangsnut zum Übergreifen eines solchen Flansches (12) des Lüftergehäusekanals (10) und eines entsprechenden Flansches an einem Ende des Kanals oder der Anordnung (20), an dem bzw. der das Lüftergehäuse angebaut werden soll, aufweist.

## Revendications

1. Un assemblage de ventilateur comprenant un carter et une unité de ventilateur (14, 16) montée à l'intérieur du carter, le carter comprenant un conduit (10) constitué d'une feuille d'une matière enroulée en forme cylindrique, et deux brides rigides en forme d'anneau (12) disposées aux extrémités opposées respectives du conduit (10), l'unité de ventilateur (14, 16) comprenant une hélice (14) qui est arrangée dans le carter de telle sorte que son axe de rotation s'étende le long de l'axe du conduit (10), caractérisé en ce que les brides (12) sont des éléments séparés du conduit (10), qui sont attachés à celui-ci, et qui sont arrangés de façon à conférer une rigidité au carter de ventilateur et pour en assurer la concentricité.

2. Un carter de ventilateur tel que revendiqué dans la revendication 1, caractérisé en ce que chacune desdites brides (12) comprend une portion cylindrique (12a) fixée au conduit (10) et une portion annulaire (12b) se projetant radialement vers l'extérieur à partir de ladite portion cylindrique (12a).

3. Un assemblage de ventilateur tel que revendiqué dans la revendication 2, caractérisé en ce que la portion annulaire (12b) de chacune desdites brides (12) est pliée vers l'intérieur (12c) dans une position inclinée dirigée vers la portion cylindrique (12a) de cette bride (12).

4. Un assemblage de ventilateur tel que revendiqué dans l'une quelconque des revendications précédentes, caractérisé en ce qu'un élément de traverse ayant ses extrémités opposées fixées au conduit porte l'unité de ventilateur (14, 16) dans ledit carter.

5. Un assemblage de ventilateur tel que revendiqué dans l'une quelconque des revendications précédentes, caractérisé en ce qu'une bande en forme d'anneau (30) est prévue pour chacune desdites brides (12), chacune desdites bandes (30) ayant une gorge périphérique intérieure destinée à s'adapter sur une desdites brides (12) du conduit (10) du carter de ventilateur et une bride correspondante sur une extrémité d'un conduit ou d'un ensemble (20) auquel le carter de ventilateur doit être assemblé.
